Europäisches Patentamt

European Patent Office

Office européen des brevets

(11) Veröffentlichungsnummer: **0 499 847 A1**

## (12) EUROPÄISCHE PATENTANMELDUNG

(21) Anmeldenummer: **92101436.1**

(22) Anmeldetag: **29.01.92**

(51) Int. Cl.5: **G01G 3/14**, G01L 1/22

(30) Priorität: **16.02.91 DE 4104816**

(43) Veröffentlichungstag der Anmeldung:
**26.08.92 Patentblatt 92/35**

(84) Benannte Vertragsstaaten:
**AT CH DE ES FR GB IT LI NL**

(71) Anmelder: **GTM GASSMANN THEISS
MESSTECHNIK GMBH
Friedrich-Ebert-Strasse 37
W-6104 Seeheim-Jugenheim(DE)**

(72) Erfinder: **Gassmann, Helmut, Dr.-Ing.
Donnersbergstrasse 3
W-6104 Seeheim-Jugenheim(DE)**

(74) Vertreter: **Katscher, Helmut, Dipl.-Ing.
Bismarckstrasse 29
W-6100 Darmstadt(DE)**

(54) **Kraftaufnehmer.**

(57) Ein Kraftaufnehmer weist einen zentralen Kraft-einleitungskörper (1) auf, auf den die zu messende Axialkraft wirkt. An seinem Umfang ist der Krafteinleitungskörper (1) biegesteif mit einem Biegeflansch (3) verbunden, der an seiner Oberseite und seiner Unterseite konzentrische Dehnungsmeßspiralen (5) trägt. An seinem äußeren Umfang ist der Biegeflansch (5) über ein ringförmiges, elastisches Gelenk (6) mit einem äußeren Lagerring (7) verbunden.

EP 0 499 847 A1

Die Erfindung betrifft einen Kraftaufnehmer mit einem zentralen Krafteinleitungskörper, der mit einem umgebenden ringförmigen, an seiner Oberseite und seiner Unterseite konzentrische Dehnungsmeßspiralen tragenden Verformungskörper verbunden ist, und mit einem äußeren konzentrischen Lagerring, der mit dem Verformungskörper über ein aus einer Ringscheibe bestehendes elastisches Gelenk verbunden ist.

Derartige Kraftaufnehmer, die beim Einsatz in Waagen auch als Wägezellen bezeichnet werden sind bekannt (DE-PS 37 14 613).
Bei diesen bekannten Kraftaufnehmern ist der Verformungskörper ein Biegering oder Torsionsring, der an seinem äußeren und inneren Durchmesser jeweils über ein aus einer Ringscheibe bestehendes elastisches Gelenk mit dem äußeren Lagerring bzw. mit dem zentralen Krafteinleitungskörper verbunden ist. Durch diese beiden elastischen Gelenke wird die zu messende Axialkraft in den Biegering eingeleitet. Diese tangentiale Dehnung bzw. Stauchung des Biegerings wird durch an seiner Unterseite und seiner Oberseite angebrachte Dehnungsmeßspiralen gemessen und als Signal der eingeleiteten Axialkraft ausgewertet.

Diese bekannte Bauart von Wägezellen zeichnet sich durch verhältnismäßig geringe Abmessungen, geringe Herstellungskosten, geringe Hysteresen und eine weitgehende Entkoppelung der zu messenden Axialkraft von unvermeidlichen Seitenkräften und Momenten aus.

Für Kraftaufnehmer hoher Nennlast, insbesondere im Bereich über 50 kN, ergeben sich verhältnismäßig große Biegeringhöhen, die zu größeren Bauhöhen der Kraftaufnehmer führen. Die die Biegeringe beiderseits begrenzenden Einstiche sind daher verhältnismäßig tief, so daß die Herstellung solcher Kraftaufnehmer für höhere Nennlasten zunehmend schwieriger wird.

Dabei ist einerseits von besonderer Bedeutung, daß die Dimensionierung solcher Kraftaufnehmer durch die im inneren elastischen Gelenk zulässigen Spannungen bestimmt wird. Andererseits ist eine ausreichende Entkoppelung des Biegerings vom zentralen Krafteinleitungskörper oder mit anderen Worten eine ausreichend hohe Elastizität des inneren Gelenks nur gewährleitet, wenn die axiale Dikke dieses inneren Gelenks höchstens ein Sechstel der axialen Höhe des Biegerings beträgt. Die Berücksichtigung dieser beiden Forderungen führt dazu, daß für das innere elastische Gelenk ein bestimmter Mindestdurchmesser eingehalten werden muß, der mit höherer Nennlast ebenfalls größer ist und der damit auch den Gesamtdurchmesser des Kraftaufnehmers bestimmt.

Eine bei höheren Nennlasten zunehmend bedeutsame Schwierigkeit derartiger Kraftaufnehmer besteht darin, daß sich ein größeres Spannungsgefälle über die Breite des Biegerings ergibt, da die Tangentialdehnungen im wesentlichen durch eine Schrägstellung des Biegerings erzeugt werden. Infolge dieses Spannungsgefälles über die Breite des Biegerings führt eine exzentrische Krafteinleitung zu einem Meßfehler.

Aufgabe der Erfindung ist es daher, einen Kraftaufnehmer der eingangs genannten Gattung so auszubildetn, daß eine weitgehende Unabhängigkeit des Meßsiganals von Einflüssen außermittiger Krafteinleitung erzielt wird. Zugleich wird eine Verringerung der Bauhöhe und des Durchmessers des Kraftaufnehmers im Bereich höherer Nennlasten angestrebt.

Diese Aufgabe wird erfindungsgemäß dadurch gelöst, daß der Verformungskörper ein an dem zentralen Krafteinleitungskörper biegesteif angeschlossener Biegeflansch ist.

Durch die in den zentralen Krafteinleitungskörper eingeleitete axiale Kraft wird der Biegeflansch weitestegehend kreisförmig nach oben gebogen. Dies führt in den Durchmesserbereichen, die mit gleicher Flanschdicke ausgeführt sind und die Dehnungsmeßspiralen tragen, zu konstanten Tangentialdehnungen, d.h. es besteht kein sich auf das Meßergebnis auswirkendes Spannungsgefälle über diesen Durchmesserbereich.

Werden diese Tangentialdehnungen in der herkömmlichen Weise über die Dehnungsmeßspiralen, die in einer Vollbrückenschaltung zusammengefaßt sind, in eine elektrische Widerstandsänderung umgesetzt, so erhält man ein der eingeleiteten Axialkraft proportionales Signal, das weitestgehend unbeeinflußt von Exzentrizitäten der Krafteinleitung ist.

Die Dicke des Biegeflansches kann verhältnismäßig klein gehalten werden, so daß sich auch bei sehr hohen Nennlasten kleine Bauhöhen der Kraftaufnehmer ergeben.

Da zwischen dem zentralen Krafteinleitungskörper und dem den Verformungskörper bildenden Biegeflansch kein elastisches Gelenk vorhanden ist, in dem die auftretenden Spannungen begrenzt werden müßten, besteht insoweit kein Zwang, einen vorgegebenen Mindestdurchmesse am inneren Rand des Verformungskörpers einzuhalten. Vielmehr erfolgt die Krafteinleitung am inneren Rand des den Verformungskörper bildenden Biegeflansches über einen biegesteifen Anschluß, in dem keine wesentlichen Spannungsspitzen auftreten.

Vorteilhafte Ausgestaltungen des Erfindungsgedankens sind Gegenstand von Unteransprüchen.

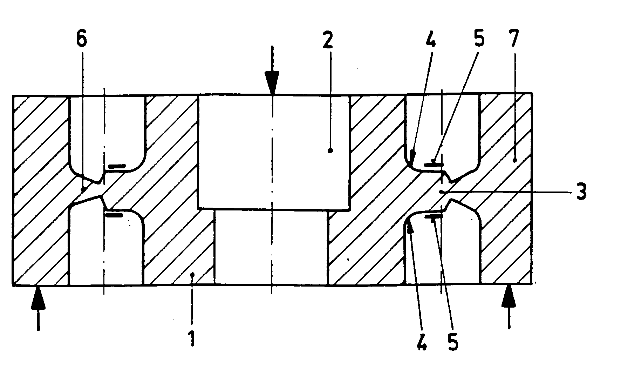

Die Erfindung wird nachfolgend an einem Ausführungsbeispiel näher beschrieben, das in der Zeichnung dargestellt ist. Die Zeichnung zeigt in einem senkrechten Axialschnitt einen Kraftaufnehmer, der beispielsweise für den Einsatz als Wägezelle bestimmt ist. Der Kraftaufnehmer weist einen zentralen Krafteinleitungskörper 1 auf, der eine zentrische, abgesetzte Bohrung 2 hat. Am Umfang des Krafteinleitungskörpers 1 ist ein Biegeflansch 3 biegesteif angeschlossen. Der Übergang zwischen dem Krafteinleitungskörper 1 und dem Biegeflansch 3 ist an der Oberseite und der Unterseite mit einer abgerundeten Hohlkehle 4 ausgeführt, um eine von Spannungsspitzen freie Krafteinleitung in den Biegeflansch 3 zu ermöglichen.

Der Biegeflansch 3, der über seinen überwiegenden Durchmesserbereich mit gleicher Flanschdicke ausgeführt ist, trägt nahe seinem Außenrand an seiner Oberseite und seiner Unterseite jeweils zwei Dehnungsmeßspiralen 5, die in der bei Dehnungsmeßstreifen üblichen Weise appliziert sind. Die ringförmigen, konzentrischen Dehnungsmeßspiralen 5 sind in einer (nicht dargestellten) Auswerteschaltung zu einer Vollbrückenschaltung zusammengefaßt. Elektrische Widerstandsänderungen der Dehnungsmeßspiralen 5 infolge von Dehnungen liefern ein Meßsignal.

An seinem Außendurchmesser ist der Biegeflansch 3 über ein aus einer schmalen Ringscheibe bestehendes elastisches Gelenk 6 mit einem äußeren Lagerring 7 verbunden, an dessen Unterseite der Kraftaufnehmer gelagert ist, wie in der Zeichnung mit Pfeilen angedeutet ist. Ebenfalls mit einem Pfeil ist angedeutet, daß die zu messende Axialkraft von oben auf den zentralen Krafteinleitungskörper 1 aufgebracht wird.

Unter der Wirkung dieser axial eingeleiteten Kraft wird der Biegeflansch 3 weitgehend kreisförmig nach oben gebogen. Die infolge der Dehnungen in den Dehnungsmeßspiralen 5 auftretenden elektrischen Widerstandsänderungen liefern in der Vollbrückenschaltung ein der eingeleiteten Axialkraft proportionales Signal. Eine exzentrische Krafteinleitung bleibt weitestgehend ohne Einfluß auf das erhaltene Meßsignal.

Wie in der Zeichnung dargestellt, ist der Biegeflansch 3 einstückig mit dem Krafteinleitungkörper 1, dem Gelenk 6 und dem Lagerring 7 ausgeführt. Die die Dehnungsmeßspiralen 5 aufnehmenden Ringräume des Kraftaufnehemrs sind jeweils durch eine (nicht dargestellte) dünne Membran hermetisch verschlossen, um störende oder schädigende Umgebungseinflüsse von den Dehnungsmeßspiralen 5 fernzuhalten.

## Patentansprüche

1. Kraftaufnehmer mit einem zentralen Krafteinleitungskörper (1), der mit einem umgebenden ringförmigen, an seiner Oberseite und seiner Unterseite konzentrische Dehnungsmeßspiralen (5) tragenden Verformungskörper verbunden ist, und mit einem äußeren konzentrischen Lagerring (7), der mit dem Verformungskörper über ein aus einer Ringscheibe bestehendes elastisches Gelenk (6)verbunden ist, dadurch gekennzeichnet, daß der Verformungskörper ein an dem zentralen Krafteinleitungskörper (1) biegesteif angeschlossener Biegeflansch (3) ist.

2. Kraftaufnehmer nach Anspruch 1, dadurch gekennzeichnet, daß die Dehnungsmeßspiralen (5) nahe am Außenrand des Biegeflansches (3) angeordnet sind.

3. Kraftaufnehmer nach Anspruch 1, dadurch gekennzeichnet, daß der Biegeflansch (3) in seinem überwiegenden Durchmesserbereich mit gleicher Flanschdicke ausgeführt ist.

4. Kraftaufnehmer nach Anspruch 1, dadurch gekennzeichnet, daß der Biegeflansch (3) einstückig mit dem Krafteinleitungskörper (1), dem Gelenk (6) und dem Lagerring (7) ausgeführt ist.

5. Kraftaufnehmer nach Anspruch 1, dadurch gekennzeichnet, daß der Übergang zwischen dem Biegeflansch (3) und dem zentralen Krafteinleitungskörper (1) an der Oberseite und der Unterseite mit einer abgerundeten Hohlkehle (4) ausgeführt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A, D | EP-A-0 288 985 (GTM GASSMANN THEISS)<br>* Spalte 3, Zeile 40 - Spalte 4, Zeile 26; Abbildung 1 *<br>--- | 1 | G01G3/14<br>G01L1/22 |
| A | WAGEN UND DOSIEREN.<br>Bd. 20, Nr. 4, Juli 1990, MAINZ DE<br>Seiten 10 - 14;<br>M. BRACHAT, H. GASSMANN: ''Neue, hochauflösende Biegering-Wägezelle'<br>* das ganze Dokument *<br>--- | 1 | |
| A | Energy & Automation, Bd 12, Nr. 3, Mai/Juni 1990, Berlin, DE; Seiten 32, 33; H. Gassmann, M. Knoeller: 'A look inside new flex-ring load cells'<br>* das ganze Dokument *<br>--- | 1 | |
| A | DE-A-2 555 231 (C. SCHENCK)<br>* Seite 4, letzter Absatz - Seite 5, Absatz 2; Abbildung 2 * | 1 | |
| | ----- | | **RECHERCHIERTE SACHGEBIETE (Int. Cl.5 )**<br><br>G01G<br>G01L |

Der vorliegende Recherchenbericht wurde für alle Patentansprüche erstellt

| Recherchenort | Abschlußdatum der Recherche | Prüfer |
|---|---|---|
| DEN HAAG | 26 MAI 1992 | GANCI P.A. |

EPO FORM 1503 03.82 (P0403)